# EUROPEAN PATENT APPLICATION

(11) **EP 0 872 656 A1**
(43) Date of publication of application: **21.10.1998**
(21) Application number: 98830199.0
(22) Date of filing: 31.03.1998
(51) Int. Cl.: F16D 43/206

(54) **A transmission clutch with idle free rotation**

(30) Priority: 14.04.1997 IT BO970222
(71) Applicant: O.M.C. S.n.c. di DANTE CAVALLI & C., 40055 Villanova di Castenaso (Bologna) (IT)
(72) Inventor: Cavalli, Dante, 40055 Villanova Di Castenaso (Bologna) (IT)
(74) Representative: Lanzoni, Luciano

(57) **Abstract**

The torque limiter clutch with idle free rotation, with a first, engaged operating position and a second, free rotation operating position, comprises a driving hub and a driven hub (21, 22), positioned in such a way that they rotate together about the same axis (A), and held against one another, so as to transmit a driving torque by means of torque transmission elements (23); a disengagement device comprising a plurality of rolling elements (213) positioned in respective recesses (215), the rolling elements (213) being moved from the recesses (215) to a race (214) between the hubs (21, 22) by transfer means (25, 28, 29, 30) when the hubs (21, 22) are in the disengaged condition, and in such a way as to hold and support the hubs (21, 22) in the second, free rotation position.

## Description

The present invention relates to a transmission clutch with limitation of the torque that may be transmitted and idle free rotation.

The use of such transmission clutches is envisaged mainly in those cases in which, when the maximum value of torque that may be transmitted has been exceeded and before stopping, the driving shaft must rotate idly relative to the driven shaft without any possibility of automatic re-engagement. Transmission clutches with torque limitation of the known type consist of a pair of coaxial hubs which may be rigidly connected to the driving and driven shafts and having rolling elements and corresponding seats on their opposite, that is to say, contact surfaces. The hubs are held against one another by elastic means which hold the rolling elements in the seats.

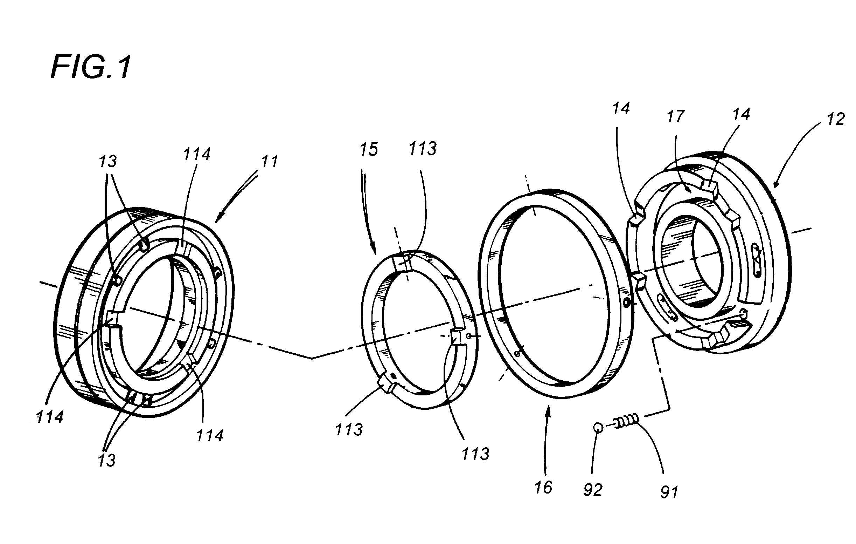

Patent IT-A-1 244 395 (corresponding to patent EP-B-0 488 963), upon which the preamble to the first claim is based, describes a type of clutch with idle or free rotation (illustrated in Figure 1) which comprises two hubs 11 and 12 which are coaxial and can be attached to elements or shafts to be kinematically connected and held against one another by elastic means.

The hub 11 comprises, on the face opposite the hub 12, a plurality of rollers 13, stably housed in corresponding seats and able to rotate freely. The hub 12 comprises as many seats 14 for housing the rollers 13. Attached to the hub 12 is a ring 15 which prevents re-insertion of the rollers 13 in the seats 14 when an excessive reaction on the hub attached to the driven shaft has caused them to exit the seats. The ring 15 is housed in a ring-shaped seat 17, made coaxially in the transverse contact face of the hub 12 and with a different diameter to that of the circle along which the rollers 13 and seats 14 are positioned. The surface of the ring facing the other hub 11 has a plurality of teeth 113, designed to be housed in the seats 114 in the hub 11.

The height of the teeth 113 relative to the axial direction of the clutch is slightly less than the relative movement made by the hubs 11, 12 when the rollers 13 exit the seats 14.

During the clutch disengagement movement when the value of the torque that may be transmitted has been exceeded, the ring 15 rotates through a given angle relative to the hub 12 and is held in this offset position by a device consisting of a spring 91 and a ball 92, which operate at three seats (not illustrated) made in the ring 15. Of these seats, the central seat corresponds with the clutch engagement position, whilst the other two create angular offsetting of the projections 113 relative to the seats 114 and, therefore, also relative to the rollers 13 and seats 14. Thus, when the rollers 13 are opposite the seats 14, clutch re-engagement is prevented by the contact created by the projections 113. When the clutch must be engaged again, it is possible to adjust a ring 16 accessible from outside the clutch and connected to the ring 15, to synchronize the projections 113 with the seats 114 and with the rollers 13 and seats 14 again.

A disadvantage of this type of clutch is discontinuous contact of the projections 113 on the relative contact track of the hub 1 where the seats 114 are located. This causes a series of impacts between the projections 113 and the contact track at each seat 114. These impacts make rotation of the disengaged clutch irregular and lead to premature wear on the projections 113 and the edges of the seats 114.

The aim of the present invention is to overcome the the above-mentioned disadvantages by providing a clutch which, in the disengaged condition, prevents the impact between the projections 113 and seats 114 in the clutch of the known type.

In other words, when the clutch disclosed by the present invention is in the disengaged condition, the elements which disengage the clutch also prevent any contact between the torque transmission elements and allow the two hubs in the clutch to rotate freely and without friction.

According to the present invention, this aim is achieved by providing the clutch with a set of rolling elements which, when the torque that may be transmitted by the clutch is exceeded, are transferred onto a rolling track between the hubs and assume the function of supporting the two hubs, opposing the action of the pressing means which act upon the clutch hubs, tending to engage it again.

The rolling elements also allow relative rotation of the two hubs without the transmission of a perceptible torque.

The rolling elements, running on the rolling track made between the two hubs, make constant contact with and allow the relative rotation of the two hubs for lengthy periods, with practically no friction and without a build up of heat.

Another important characteristic is provided by the clutch re-engagement device. By moving a ring nut, diverter elements are inserted along the path of the race for the rolling elements. The function of these diverter elements is to divert the rolling elements, moving them from the zone in which they allow free rotation of the hubs to the recesses in which they were positioned before clutch disengagement. Therefore, when the rolling elements have returned to the respective recesses, the two hubs can return to the condition in which they are engaged and so transmit torque.

Movement of the ring nut to the re-engagement position is particularly easy and does not require an effort by the operator, since the ring nut acts indirectly upon the rolling elements by means of the diverter elements. The movement of the rolling elements from the disengagement zone to the clutch engagement zone and, as a result, the relative force necessary for the movement, are determined by the relative movement of the hubs and the diverter elements which force the rolling elements to move from the clutch disengagement zone towards the recesses that allow clutch engagement.

Further characteristics and advantages of the present invention are described in the dependent claims and description herein.

The invention is described in more detail below, with reference to the accompanying drawings, which illustrate preferred embodiments, without restricting the scope of the invention, and in which:
- Figure 1 is an exploded view of a torque limiter clutch with free rotation of the known type;
- Figure 2 is an axial section of the torque limiter clutch with free rotation made according to the present invention, in the torque transmission condition;
- Figure 3 is an axial section of the torque limiter clutch with free rotation made according to the present invention, in the free rotation condition;
- Figure 4 is a front view of the clutch illustrated in Figures 2 and 3, with some parts cut away to better illustrate others;
- Figure 5 is an axial section of the torque limiter clutch with free rotation made according to the present invention, in the free rotation condition and close to re-engagement; and
- Figure 6 is an exploded view of the clutch illustrated in Figures 2 to 5.

With reference to the accompanying drawings, the torque limiter clutch disclosed rotates freely when idle and comprises two hubs 21 and 22, which can be keyed in the known manner to two coaxial shafts, not illustrated. The hubs 21 and 22 have a plurality of torque transmission elements 23 and corresponding seats 24. The torque transmission elements 23, shown by way of example as rollers 23, are housed in seats and can only rotate idly about their axes, positioned along directions radial to the hub to which they are attached. Obviously, the rollers 23 may be substituted with equivalent elements, for example, a set of balls with relative cage. Moreover, the radial positioning of the elements 23 relative to the clutch is not restrictive, since various oblique or axial positions are also possible.

The clutch also comprises pressing means 32, which hold the hubs 21, 22 and the elements 23 together, so as to allow torque transmission. The pressing means 32 in the accompanying drawings are illustrated as Belleville washers, although any suitable type of pressing means may be used: mechanical, magnetic, pneumatic or hydraulic. In the example illustrated in the accompanying drawings, the Belleville washers 32 are attached to a central support 20, the latter having a substantially tubular shape. The internal surface of the central support has keying means of the known type (for example, a seat for a tab or key, or a splined section) and one end of the external surface has a stop, upon which a thrust bearing 202 is mounted and a cylindrical part upon which a bearing 201, preferably of the rolling type, is mounted. The hub 22 is also mounted on said end, in such a way that it may rotate freely although axially fixed. The other end of the central support 20 has a set of longitudinal splines which allow the other hub 21 to be keyed to it, said hub being attached at an angle to the support 20 by elements which are inserted in the splines on the support, and being free to move axially relative to the support.

However, the axial movement of the hub 21 is limited by the Belleville washers 32. The latter exert their elastic force on the hub 21 through a separator ring 33, whilst, on the other side, they are preloaded by a ring 31 screwed onto the other end of the central support 20. Tightening the ring 31 increases the preloading of the Belleville washers 32, thus increasing the torque value which can be transmitted by the clutch. The ring 31 also has locking means 31a, of the known type, to prevent the ring 31 from rotating relative to the central support 20.

In the accompanying drawings a clutch is shown, by way of example, in which the torque transmission elements 23 and seats 24 are spaced at equal angular intervals, meaning that the clutch can only re-engage after a fraction of relative rotation of the hubs 21, 22 equal to the individual angle between the elements 23 and seats 24.

However, the torque transmission elements 23 and seats 24 may also be positioned at various angles, in which case the elements 23 and seats 24 may be aligned with one another only for a precise value of relative rotation of the two hubs 21 and 22.

The clutch disengagement device comprises a plurality of rolling elements which, in the embodiment illustrated, are balls 213. These balls are housed in recesses 215 made in a ring-shaped seat in one of the two hubs 21, 22 and coaxial with the hub. Inside this ring-shaped seat is a ring 25 which can move axially relative to the hub on which it is mounted, but is forced to rotate with the hub by pins 28. The ring 25 is, in turn, pressed by second pressing means, consisting of helical springs 30. The helical springs 30 are housed in longitudinal through-holes made in the hub 21, the through-holes being closed on one side by the separator ring 33. It should be noticed that, since the force of the Belleville washers 32 is greater than the force of the helical springs 30, the separator ring 33 does not move and remains constantly in contact with the hub 21.

The through-holes designed to house the helical springs 30 are also used for the pins 28 and facilitate assembly and construction of the hub 21, although they may be substituted with blind holes, thus eliminating the separator ring 33.

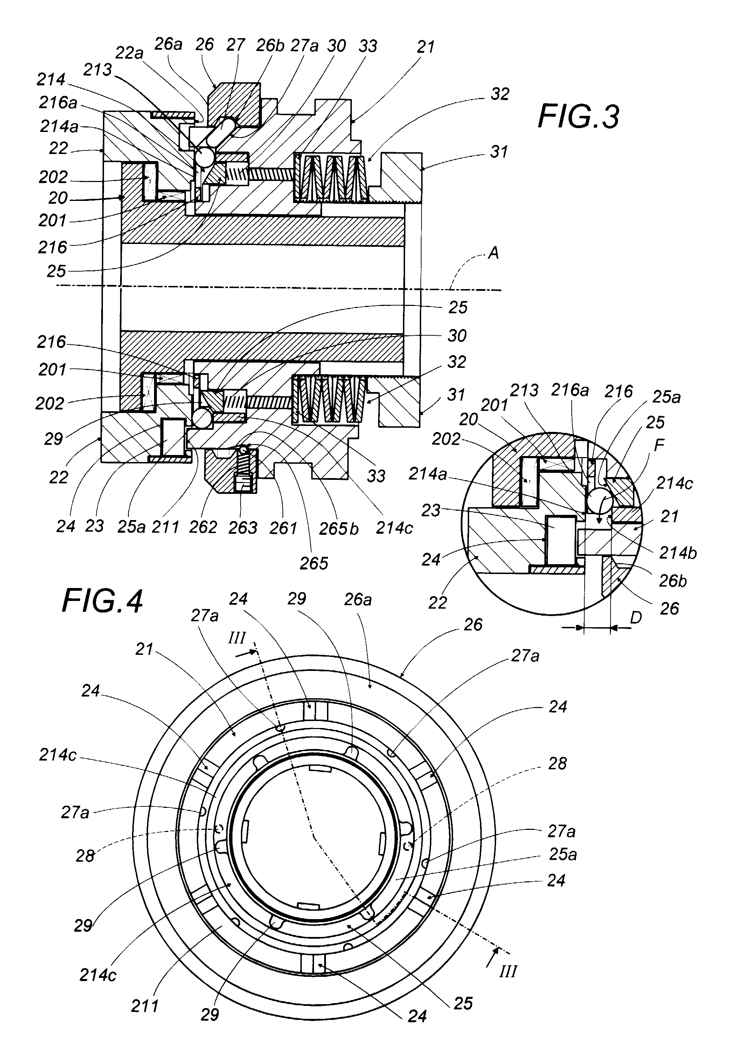

In practice, the ring 25 holds the balls 213 constantly pushed towards the plane of separation S against the corresponding opposite part of the hub. As soon as the clutch exceeds the torque value that can be transmitted, the hub 22 moves axially relative to the hub 21, making the race 214 accessible to the balls 213. The race 214 is between the hubs 21, 22 which bear the tracks 214a and 214b along which the balls 213 roll. The axial distance D (see detail in Figure 3) separating the tracks 214a and 214b after the rollers 23 exit the seats 24 corresponds to the diameter of the balls 213. Therefore, the balls 213 are moved by the ring 25 into the race 214 between the tracks 214a and 214b. The balls 213, rolling between the tracks 214a and 214b and acting as a thrust bearing, hold the two hubs 21, 22 apart and assume the function of opposing the pressing means 32, which would tend to re-engage the clutch.

The balls 213 can roll between the tracks 214a and 214b for an indefinite period without perceptible friction and without a build-up of heat, and for this reason the track surfaces are preferably hardened and, in particular, a ring 214c made of suitable material is envisaged on at least one track.

The movement of the balls 213 in the race 214 is facilitated by the conical surface 25a of the ring 25. The recesses 215 in which the balls 213 are originally positioned are on a diameter which is generally different and, in this case, smaller than the diameter of the race 214.

The conical surface 25a facilitates both axial and radial movement of the balls 213.

In a preferred embodiment, the axial distance D between the rolling tracks 214a and 214b, said distance created after the rollers 23 exit the relative seats 24, is smaller than the diameter of the balls 213.

In the latter case, to further facilitate the movement of the balls 213 on the rolling track 214, the ring 25 has at least one cam 29. During rotation of the hub 22 relative to the ring 25, the cam 29 forces the ball 213 between the tracks 214a and 214b in an oblique direction, indicated by the arrow F in the detail in Figure 3.

In this way, the balls 213 cause the hub 21 to complete a further axial movement relative to the hub 22, thus preventing any residual contact between the rollers 23 and hub 21 in the rolling zone 211 in which the seats 24 are found.

In the embodiment illustrated in the accompanying drawings, there are six balls 213, to allow a suitable reaction to the pressing means 32. The balls 213 are spaced at equal angular intervals by a cage 216 which has slots 216a at the position of the balls 213. The slots 216a are made in such a way as to allow the balls 213 a given axial or radial movement, but to prevent movements which modify the angles between the balls. It should be noticed that to speed up insertion of the balls 213 between the rolling tracks 214a and 214b, the number of cams 29 is preferably equal to the number of rolling elements, or the balls 213, that is to say, in the embodiment illustrated, there are six, also spaced at equal angular intervals.

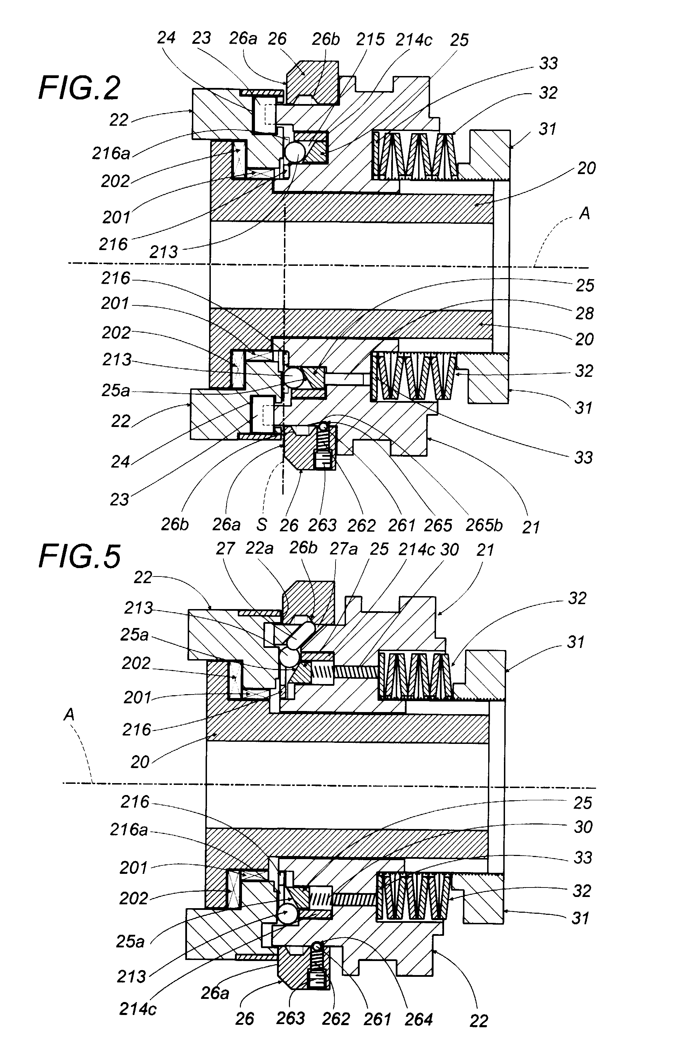

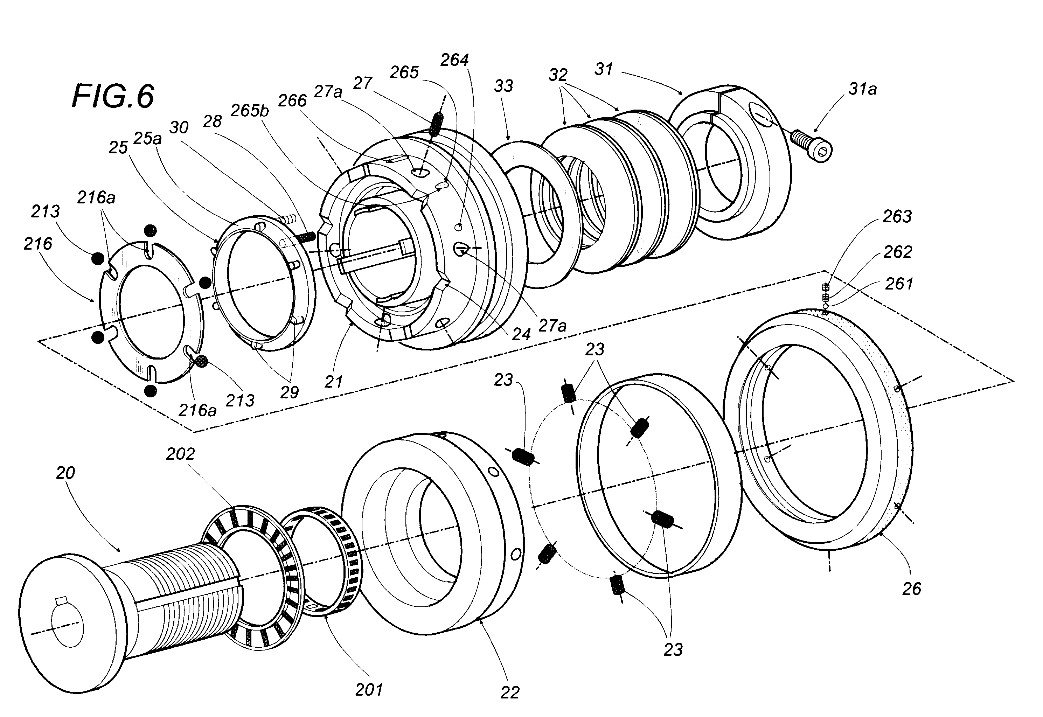

The clutch can only be re-engaged by adjusting the re-engagement ring nut 26, located on the outside of the hub 21. This ring nut 26 is mobile between an engagement/disengagement position illustrated in Figures 2 and 3 and a re-engagement position illustrated in Figure 5. The latter position is possible only if the clutch is in the disengaged condition. Only in this condition is there sufficient space for the axial travel of the ring nut 26. Figure 2, relative to the engaged clutch, and figure 5, relative to the clutch in the disengaged condition with the ring nut 26 in the clutch re-engagement position, should be compared. When the ring nut 26 is in this re-engagement position, its surface 26a, facing the hub 22, co-operates with the latter, that is to say, it is substantially in contact with the ring-shaped surface 22a of the hub 22 facing the ring nut 26. The ring nut 26 is held in its two positions by positioning means. These positioning means comprise balls 261 which are pressed by helical springs 262 inside radial holes in the ring nut 26. A grub screw 263 is screwed into a threaded part of the radial hole, closing it. The corresponding part of the hub, on which the ring nut 26 slides, has seats for the positioning balls 261. The seat 264 for the re-engagement position has the shape of a spherical bowl, thus the ball 261 enters the seat only when directly in front of said seat. The seat 265 for the engagement/disengagement position also has the shape of a spherical bowl, but also has a guide zone 265b, created so as to facilitate achievement of this position even when the ball is not directly in front of the seat 265. The hub also has slotted seats 266 with axes parallel with the axis A of the clutch. The pins connected to the ring nut 26 are inserted in the seats 266, allowing the ring nut 26 to slide axially, but preventing it from rotating relative to the hub on which it slides. In the embodiment illustrated, two slotted seats 266, three re-engagement position seats 264 and three engagement/disengagement position seats 265, 265b are envisaged.

In the ring nut 26 on the hub 21, there is at least one hole 27a with an oblique axis, in a substantially conical direction, within which a pin 27 can slide axially, said pin preferably having rounded ends.

In a preferred embodiment, there are six holes 27a and pins 27. With reference to Figure 4, it should be noticed that the holes 27a are at an angle which is offset relative to the position of the ring 25 cams 29, and in particular, the holes 27a are on the bisecting line of the angle formed by two consecutive cams 29. The holes 27a, and so also the pins 27, are positioned on the rolling track 214b in such a way that one end of the pins can protrude onto the rolling track 214b, thus obstructing the rolling movement of the balls 213 on the track 214b. The other end of the pins 27 is in contact with an internal surface 26b of the ring nut 26. This surface 26b is conical and of a shape that allows it to be attached to the pins 27. The movement of the ring nut 26 to the re-engagement position causes the pins 27 to protrude onto the rolling track 214b.

In practice, the end of the pins 27 force the balls 213 rolling on the track 214b to return to the recess 215 zone, therefore, as soon as the rollers 23 are opposite the seats 24, the two hubs 21, 22 can re-engage. Since re-engagement of the hubs 21, 22 also causes a relative axial movement, the re-engagement ring nut 26 is brought into contact with the hub 22 again at its original engagement/disengagement position. Achievement of this position is facilitated by positioning means 261, 262, 263 which are inserted in the guide zone 265b of the seat 265 for the engagement/disengagement position on the hub.

The pins 27 are also returned to the retracted position, that is to say, the position in which they do not obstruct the track 214b, by suitable return means (not illustrated), for example, elastic means. The retraction of the pins 27 is facilitated by rotation of the clutch, due to the centrifugal force which develops on them. In a preferred embodiment, the pin 27 return means are absent and pin return is left to centrifugal force alone.

One advantage of the engagement - disengagement system described is that the ring nut 26 can easily be moved by the operator from the disengagement position to the engagement position and vice versa, without any effort.

In fact, the ring nut 26 acts upon the pins 27 which are not subjected to any type of loading, since the balls 213 support the action of the springs 32 which tend to re-engage the hubs 21, 22. The rolling of the balls 213, caused by the relative movement of the hubs 21, 22 during the idle free rotation stage, and the obstacle created by the ends of the pins 27, cause the balls 213 to return to the recess 215 zone and so re-engagement of the hubs.

In other words, the hubs 21, 22 are re-engaged because the balls 213 move from the track 214b to the recess 215 zone, driven by a kind of dynamic servomechanism due to the rolling action of the balls and caused by the pins 27, whose rounded ends divert the balls 213.

## Claims

1. A torque limiter clutch with idle free rotation, having a first, engaged operating position and a second, free rotation operating position, comprising a driving hub and a driven hub (21, 22), these being positioned in such a way that they rotate together about the same axis (A), and being held against one another in such a way as to transmit a driving torque by means of torque transmission elements (23), said elements (23) being carried by one of the two hubs (21; 22) and pushed in the direction of the plane of separation (S) of the two hubs by first pressing means (31, 32, 33) in seats (24) in the other hub (22; 21); and at least one disengagement device (25, 28, 29, 30, 213), being attached to at least one of the hubs (21; 22) and designed to keep the clutch in said second, free rotation operating position, the clutch being characterized in that the disengagement device comprises a plurality of rolling elements (213), being positioned in recesses (215), the rolling elements (213) being pushed in the direction of the plane of separation (S) against one of the two hubs (21; 22) by first transfer means (25, 28, 29, 30) attached to the other hub (22; 21); a race (214) between the two hubs (21, 22), being designed to house the rolling elements (213) moved from the recesses (215) to the race (214) by said first transfer means (25, 28, 29, 30) when the hubs (21, 22) are in the disengaged condition and in such a way as to hold and support the hubs in said second, free rotation operating position.

2. The clutch according to claim 1, characterized in that at least one of the hubs (21; 22) comprises second transfer means (26, 27, 261, 262, 263, 264, 265, 266), designed, when actuated, to move the rolling elements (213) from the race (214) to the recesses (215), thus allowing the hubs (21, 22) to return to the first, engaged operating position.

3. The clutch according to claim 1 or 2, characterized in that the first transfer means comprise a ring-shaped seat (251) positioned on one of the hubs (21; 22), there being in this seat, sliding in a direction parallel with the axis (A) of the hubs and coaxial with said hub (21; 22), a ring (25) with guide elements (28) and second pressing means (30), the latter pressing the ring (25) towards the plane of separation (S) against the other hub (22; 21).

4. The clutch according to claim 3, characterized in that the conical ring (25) has a conical surface (25a) and at least one cam (29), said conical surface and cam being designed to facilitate the transfer of the rolling elements (213) into the race (214).

5. The clutch according to claim 3 or 4, characterized in that the recesses (215) are positioned on a circle with a diameter different to the diameter of the race (214).

6. The clutch according to one of the foregoing claims, characterized in that the race (214) has a first track (214a) on one of the hubs (21; 22) and a second track (214b) on the other hub (22; 21) and opposite the first track (214a), said tracks being positioned and shaped in such a way that, in practice, when the clutch is in the disengaged operating condition the tracks are separated by an axial distance (D), this distance being less than the size of the corresponding part of the rolling elements (213) which are inserted and roll between the tracks; the ring (25) forcing said rolling elements to enter between the first and second tracks (214a, 214b), moving the tracks further away from one another so as to prevent any residual contact between the torque transmission elements (23) and the hub (22; 21) in the rolling zone (211) in which the seats (24) are located.

7. The clutch according to claim 2, characterized in that the second transfer means comprise an engagement ring nut (26) located on one of the hubs (21; 22), said ring nut (26) being controllable from the outside and being mobile between a first, clutch engagement/disengagement operating position and a second, clutch re-engagement operating position; there being at least one diverter element (27) attached to the ring nut (26) and being on at least one rolling track (214a; 214b), designed to move the rolling elements (213) from the race (214) to the recesses (215) when the ring nut (26) is in the clutch re-engagement operating position.

8. The clutch according to claim 7, characterized in that the diverter element is a pin (27) positioned on at least one rolling track (214a; 214b), said pin (27) being mobile between a first, clutch engagement/disengagement operating position in which the rolling track (214a; 214b) is continuous and uninterrupted and a second, clutch re-engagement position, in which the rolling track (214a; 214b) is obstructed by the pin (27), causing the rolling elements (213), as they roll on the track (214a; 214b), to be diverted to the recesses (215).

9. The clutch according to claim 7 or 8, characterized in that the ring nut (26) positioned on one of the hubs (21; 22), when in the second, re-engagement position, co-operates with the other hub (22; 21) in such a way that following clutch re-engagement, said other hub (22; 21) returns the ring nut (26) to the first, clutch engagement/disengagement operating position.

10. The clutch according to one of the claims from 7 to 9, characterized in that the ring nut (26) has positioning means (261, 262, 263) which may be inserted in at least one first seat (265) on the hub (21; 22) to which the ring nut is attached, said first seat being designed to maintain the clutch first, engagement/disengagement operating position, and at least one second seat (266), again on the hub (21; 22) to which the ring nut is attached, said second seat being designed to maintain the second, clutch re-engagement operating position.

11. The clutch according to claim 10, characterized in that the first seat (265) comprises a guide zone (265b) for the positioning means (261, 262, 263), so that the ring nut (26), when close to the clutch first, engagement/disengagement operating position, is brought to said first operating position by the guide zone (265b).

12. The clutch according to claim 6, characterized in that at least one of the rolling tracks (214a, 214b) has a hardened zone created with a ring (214c).

13. The clutch according to one of the claims from 3 to 6, characterized in that the first pressing means develop a greater force than the second pressing means (30).

14. The clutch according to one of the foregoing claims, characterized in that the rolling elements (213) are kept at an angle from one another and allowed to move radially by a cage (216).
